# EUROPÄISCHE PATENTSCHRIFT

(11) **EP 0 383 422 B1**
(45) Veröffentlichungstag und Bekanntmachung des Hinweises auf die Patenterteilung: **03.01.1996**
(21) Anmeldenummer: 90250049.5
(22) Anmeldetag: 14.02.1990
(51) Int. Cl.: G09B 23/28

(54) **Kiefermodell**
Jaw model
Modèle de maxillaire

(30) Priorität: 16.02.1989 DE 3904950
(43) Veröffentlichungstag der Anmeldung: 22.08.1990
(73) Patentinhaber: Oestreich, Gerd, D-13593 Berlin (DE)
(72) Erfinder: Oestreich, Gerd, D-13593 Berlin (DE)
(74) Vertreter: Böning, Manfred, Dr.-Ing.

(56) Entgegenhaltungen:
- EP-A- 0 253 757
- DE-C- 631 630
- FR-A- 2 640 787
- US-A- 4 242 812

## Beschreibung

Die Erfindung bezieht sich auf ein Kiefermodell zur Demonstration von zahnerhaltenden und teilprothetischen zahnmedizinischen Arbeiten sowie Krankheitsbildern mit mindestens einem in einer Ausnehmung eines Kieferbogens gelagerten Einsatzteil, das an gegenüberliegenden Seiten seines Umfanges unter Schwenken um eine Drehachse wechselweise in eine Funktionslage überführbare Anschauungsmuster von Einzelzähnen, Zahngruppen, unbezahnten gesunden sowie pathologischen Kieferbogenabschnitten aufweist.

Aus der DE-PS 36 19 869 ist ein Kiefermodell der vorstehenden Art mit einem Einsatzteil bekannt, das eine Drehachse aufweist, die in Richtung des Kieferbogens verläuft. Das bekannte Kiefermodell eignet sich vornehmlich für die Demonstration von Kieferbogenabschnitten außerhalb des Frontzahnbereiches, während es für die Demonstration von Frontzahnpartien weniger geeignet ist.

Der Erfindung liegt die Aufgabe zugrunde, ein Kiefermodell zu schaffen, das sich insbesondere zur Darstellung von gebogenen Kieferbogenabschnitten zugeordneten Zahnpartien eignet und einen schnellen Wechsel von Änschauungsmustern ermöglicht.

Diese Aufgabe wird bei einem Kiefermodell der eingangs beschriebenen Gattung dadurch gelöst, daß die Drehachse von einem etwa rechtwinklig zum Einsatzteil orientierten Steckbolzen gebildet ist, der dreh- und verschiebbar in einer in die Ausnehmung mündenden Führungsbohrung im Zungen- oder Gaumenteil des Modells geführt ist.

Das erfindungsgemäße Kiefermodell ist einfach handhabbar und gestattet auf engstem Raum einen schnellen direkten Vergleich von Zahnerhalt- oder Zahnersatzalternativen und Anomalien des bezahnten oder unbezahnten Kieferbogens, wobei die sich gegenüberliegenden Anschauungsmuster insbesondere Soll- und Ist-Zustände darstellen.

Die Erfindung wird im folgenden anhand der beigefügten Zeichnung näher erläutert. Es zeigen:
Fig. 1 die perspektivische Ansicht eines Kiefermodells in einem sich in der Funktionslage befindenden Einsatzteil,
Fig. 2 eine Draufsicht auf das Kiefermodell bei in seine Schwenkstellung überführtem Einsatzteil,
Fig. 3 die Vorderansicht des Kiefermodells während des Schwenkvorganges seines Einsatzteiles,
Fig. 4 die wesentlichen Bauteile des Kiefermodells gemäß den Fig. 1 - 3 in explosionsartiger Darstellung,
Fig. 5 ein modifiziertes Einsatzteil und
Fig. 6 ein weiteres abgewandeltes Einsatzteil.

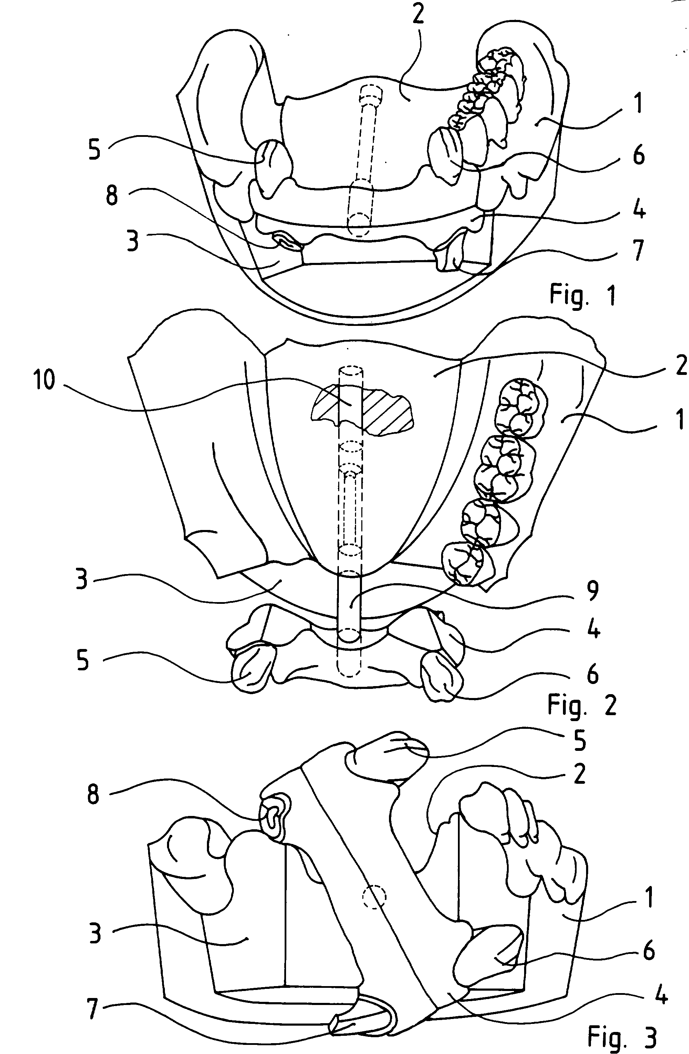

In Figur 1 ist 1 der ein Zungenteil 2 umschließende Kieferbogen eines Kiefermodells, das im vorderen Kieferbereich mit einer Ausnehmung 3 versehen ist. In die Ausnehmung 3 ist ein Einsatzteil 4 eingefügt, dessen sich in der Funktionslage befindendes Anschauungsmuster einen mit einer Krone versehenen Zahn 5 und einen Stiftzahn 6 zeigt. Das außerhalb der Funktionslage befindliche Anschauungsmuster läßt demgegenüber den zur Aufnahme einer Krone präparierten Zahn 7 und die zur Aufnahme eines Stiftzahnes präparierte Zahnwurzel 8 erkennen.

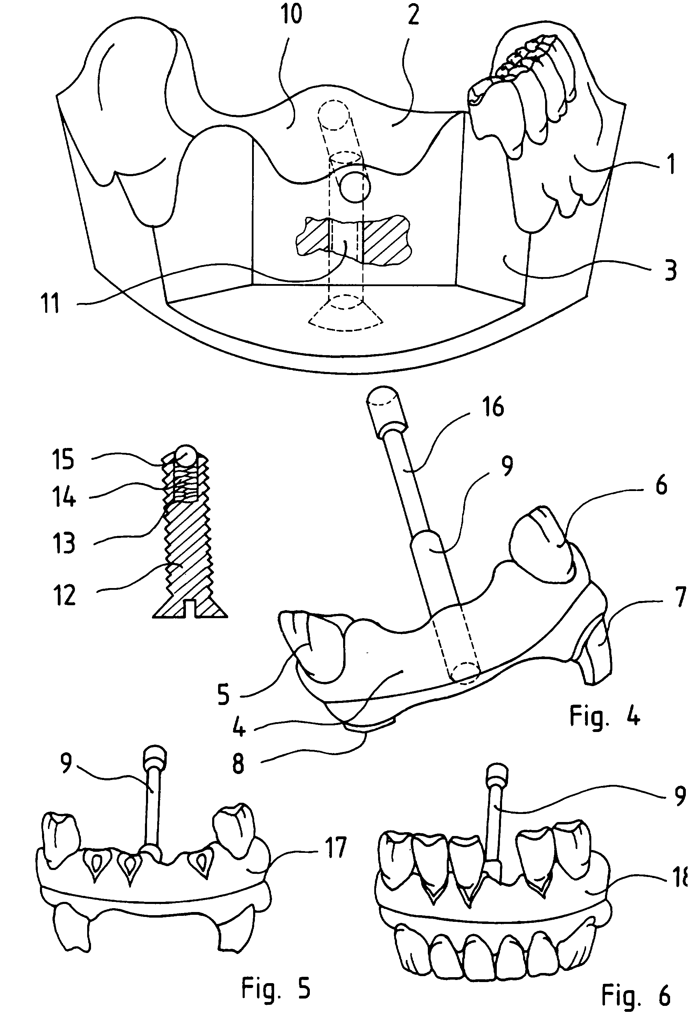

Um einen Wechsel der Anschauungsmuster vornehmen zu können, ist das Einsatzteil mit einem Steckbolzen 9 versehen, der in einer Führungsbohrung 10 des Zungenteiles 2 geführt ist. In die Führungsbohrung 10 mündet eine zur Unterseite des Modells offene Gewindebohrung 11, die zur Aufnahme einer Schraube 12 dient. Die Schraube 12 ist an ihrem der Führungsbohrung 10 zugewandten Ende mit einem Sackloch 13 zur Aufnahme einer Feder 14 und zur Halterung eines von einer Kugel gebildeten Anschlages 15 versehen. Der Anschlag 15 wirkt mit einem Abschnitt 16 des Steckbolzens 9 zusammen, dessen Durchmesser kleiner ist als der Durchmesser des übrigen Teiles des Steckbolzens 9 bzw. als der Durchmesser der Führungsbohrung 10. Die Länge des Abschnittes 16 entspricht dem Weg, um den das Einsatzteil 4 aus der Ausnehmung 3 herausbewegt werden muß, um es um die Längsachse des Steckbolzens 9 schwenken zu können. Eine weitere Bewegung des Steckbolzens 9 nach außen ist nur unter Überwindung der Kraft der Feder 14 möglich. Sie wird dann vorgenommen, wenn das in den Figuren 1 bis 4 dargestellte Einsatzteil durch abgewandelte Einsatzteile der in den Figuren 5 und 6 in verkleinertem Maßstab dargestellten Art ersetzt werden soll, um andere Situationen zu demonstrieren.

## Patentansprüche

1. Kiefermodell zur Demonstration von zahnerhaltenden und teilprothetischen zahnmedizinischen Arbeiten sowie Krankheitsbildern mit mindestens einem in einer Ausnehmung (3) eines Kieferbogens (1) gelagerten Einsatzteil (4, 17 18), das an gegenüberliegenden Seiten seines Umfangs unter Schwenken um eine Drehachse wechselweise in eine Funktionslage überführbare Anschauungsmuster von Einzelzähnen, Zahngruppen, unbezahnten gesunden sowie pathologischen Kieferbogenabschnitten aufweist, dadurch gekennzeichnet, daß die Drehachse von einem etwa rechtwinklig zum Einsatzteil (4,17,18) orientierten Steckbolzen (9) gebildet ist, der dreh- und verschiebbar in einer in die Ausnehmung (3) mündenden Führungsbohrung (10) im Zungen- oder Gaumenteil (2) des Modells geführt ist.

2. Kiefermodell nach Anspruch 1, dadurch gekennzeichnet, daß an dem Steckbolzen (9) ein zur Begrenzung seiner Längsbewegungen dienender Anschlag (15) eingreift.

3. Kiefermodell nach Anspruch 2, dadurch geknnzeichnet, daß der Anschlag (15) federnd in einer Bohrung (11) quer zur Führungsbohrung (10) für den Steckbolzen (9) gelagert ist.

4. Kiefermodell nach Anspruch 2 oder 3, dadurch gekennzeichnet, daß der Steckbolzen (9) zwischen seinen beiden Enden einen Abschnitt (16) mit einem reduzierten Durchmesser aufweist, dessen Länge in Verbindung mit dem Anschlag (15) die Längsbewegung des Einsatzteiles (4,17,18) aus der Ausnehmung (3) begrenzt.

5. Kiefermodell nach einem der Ansprüche 2 bis 4, dadurch gekennzeichnet, daß der Anschlag (15) zum Zwecke des Auswechselns des Einsatzteiles (4,17,18) gegen die Kraft einer Feder (14) überwindbar ist.

6. Kiefermodell nach einem der Ansprüche 2 bis 5, dadurch gekennzeichnet, daß der Anschlag (15) von einer Kugel gebildet wird.

7. Kiefermodell nach einem der Ansprüche 2 bis 6, dadurch gekennzeichnet, daß der Anschlag (15) zusammen mit einer ihn gegen einen Haltebund drückenden Feder (14) in einem am Ende einer in eine Gewindebohrung (11) geschraubten Schraube (12) angeordneten Sackloch (13) gelagert ist.

8. Kiefermodell nach einem der Ansprüche 1 bis 7, dadurch gekennzeichnet, daß das Einsatzteil (4,17,18) einen Frontzahnkieferteil bildet.

## Claims

1. Jaw model for the demonstration of tooth-preserving and prosthetic dental work as well as clinical pictures with at least one insert (4,17,18) which is mounted in a recess (3) of a mandibular arch (1) and has on opposite sides of its periphery demonstration models of individual teeth, groups of teeth, edentate healthy and pathological mandibular arch sections, which can in turn be moved into a functional position by pivoting about an axis of rotation, characterized in that the axis of rotation is formed by a socket pin (9) which is oriented approximately at right angles to the insert (4, 17, 18) and is guided rotatably and movably in a guide hole (10) in the tongue or gum part (2) of the model, which hole opens into the recess (3).

2. Jaw model according to Claim 1, characterized in that a stop (15) engages on the socket pin (9) and serves to limit its longitudinal movements.

3. Jaw model according to Claim 2, characterized in that the stop (15) is spring-mounted in a drill hole (11) transversely to the guide drill hole (10) for the socket pin (9).

4. Jaw model according to Claim 2 or 3, characterized in that the socket pin (9) has between its two ends a section (16) with a reduced diameter, the length of which limits in conjunction with the stop (15) the longitudinal movement of the insert (4, 17, 18) out of the recess (3).

5. Jaw model according to one of Claims 2 to 4, characterized in that the stop (15) can, for the purpose of exchanging the insert (4, 17, 18), be surmounted against the force of a spring (14).

6. Jaw model according to one of Claims 2 to 5, characterized in that the stop (15) is formed by a ball.

7. Jaw model according to one of Claims 2 to 6, characterized in that the stop (15) is mounted together with a spring (14), which presses it against a retaining shoulder, in a blind hole (13) arranged at the end of a screw (12) which is screwed into a threaded drill hole (11).

8. Jaw model according to one of Claims 1 to 7, characterized in that the insert (4, 17, 18) forms an anterior jaw part.

## Revendications

1. Maquette de mâchoire pour La démonstration de travaux de médecine dentaire et de parties de prothèses ainsi que pour la démonstration de tableaux de maladie, comportant au moins un insert (4, 17, 18) Logé dans un évidement (3) d'un arc (1) de la mâchoire, qui comporte sur les côtés opposés de sa périphérie des échantillons d'exposition de dents individuelles, de groupes de dents et de sections d'arcs de mâchoires dépourvus de dents, sains aussi bien que pathologiques, et qui peuvent être transportés tour à tour autour d'un axe de rotation dans une position fonctionnelle, caractérisée en ce que l'axe de rotation est constitué d'un axe débrochable (9) orienté perpendiculairement par rapport à I'insert (4, 17, 18), et cet axe débrochable est guidé rotativement et de manière coulissante dans un alésage de guidage (10) qui débouche dans l'évidement (3) dans la partie de la langue ou du palais (2) de la maquette.

2. Maquette de mâchoire selon La revendication 1, caractérisée en ce qu'une butée (15) est en prise avec l'axe débrochable pour limiter ses déplacements longitudinaux.

3. Maquette de mâchoire selon la revendication 2, caractérisée en ce que la butée (15) est montée élastiquement dans un alésage (11) transversalement à l'alésage (10) de guidage pour l'axe débrochable (9).

4. Maquette de mâchoire selon la revendication 2 ou 3, caractérisée en ce que l'axe débrochable (9) comporte entre ses deux extrémités un tronçon (16) de diamètre réduit, dont la longueur, en liaison avec la butée (15), limite le déplacement longitudinal de l'insert (4, 17, 18) à l'extérieur de l'évidement (3).

5. Maquette de mâchoire selon l'une des revendications 2 à 4, caractérisée en ce que la butée (15) peut être franchie contre la force d'un ressort (14) dans Le but d'échanger l'insert (4, 17, 18).

6. Maquette de mâchoire selon l'une des revendications 2 à 5, caractérisée en ce que la butée (15) est constituée d'une bille.

7. Maquette de mâchoire selon l'une des revendications 2 à 6, caractérisée en ce que la butée (15) est montée avec un ressort (14) qui la sollicite contre un collet de retenue, dans un trou borgne agencé à une extrémité d'une vis (12) vissée dans un trou taraudé (11).

8. Maquette de mâchoire selon l'une quelconque des revendications 1 à 7, caractérisée en ce que l'insert (4, 17, 18) constitue une partie des dents de face de la mâchoire.
